# FASCICULE DE BREVET EUROPEEN

(11) **EP 3 402 920 B1**
(45) Date de publication et mention de la délivrance du brevet: **09.10.2019**
(21) Numéro de dépôt: 17702682.0
(22) Date de dépôt: 11.01.2017
(51) Int. Cl.: D06F 75/12

(54) **APPAREIL ÉLECTROMÉNAGER COMPORTANT UN ORGANE AMOVIBLE DEVANT ÊTRE ENLEVÉ POUR EFFECTUER UNE OPÉRATION DE MAINTENANCE**
ELEKTROHAUSHALTSGERÄT MIT EINEM ABNEHMBAREN TEIL BEVOR DIESES ZUM DURCHFÜHREN EINER WARTUNG ENTFERNT WIRD
HOUSEHOLD APPLIANCE COMPRISING DETACHABLE MEANS BEFORE BEING REMOVED FOR MAINTENACE

(30) Priorité: 15.01.2016 FR 1650340
(43) Date de publication de la demande: 21.11.2018
(73) Titulaire: SEB S.A., 69130 Ecully (FR)
(72) Inventeur: GELUS, Dominique, 38780 Pont-Eveque (FR)
(74) Mandataire: Bourrières, Patrice
(86) Numéro de dépôt international: PCT/FR2017/050056
(87) Numéro de publication internationale: WO 2017/121953

(56) Documents cités:
- EP-A1- 2 960 365
- FR-A1- 2 890 944

## Description

La présente invention se rapporte à un appareil électroménager comprenant un organe amovible devant être enlevé pour effectuer une opération de maintenance et un indicateur activé automatiquement par l'appareil pour alerter l'utilisateur sur la nécessité d'effectuer ladite opération de maintenance et se rapporte plus particulièrement à un appareil comportant un dispositif de détection permettant de s'assurer que l'opération de maintenance a bien été réalisée par l'utilisateur.

Il est courant dans le domaine des appareils électroménagers que l'utilisateur soit obligé d'effectuer régulièrement une opération de maintenance, telle qu'une opération de détartrage, afin de garantir une bonne longévité de l'appareil. Ainsi, pour les appareils de repassage munis d'une cuve pour la génération de vapeur sous pression, il est recommandé de rincer régulièrement la cuve génératrice de vapeur à grandes eaux, par exemple tous les dix pleins de réservoir, pour évacuer les dépôts de tartre. Un tel rinçage régulier de la cuve permet d'éviter que le tartre ne s'accumule en trop grande quantité dans la cuve et ne soit transporté par le flux de vapeur dans le fer, condamnant à terme le bon fonctionnement de l'appareil.

Cependant, la demanderesse s'est rendu compte que, dans la pratique, l'utilisateur oubliait souvent d'effectuer régulièrement cette opération de maintenance, au détriment de la durée de vie de l'appareil. Pour remédier à cet inconvénient, il est connu de disposer sur l'appareil un voyant indicateur de maintenance qui est activé automatiquement, par exemple après un temps de fonctionnement cumulé de l'appareil, pour alerter l'utilisateur sur la nécessité d'effectuer l'opération de maintenance, un bouton étant prévu sur l'appareil pour éteindre le voyant indicateur et réinitialiser son processus d'activation lorsque l'utilisateur a effectué la maintenance.

Cependant, malgré la présence de cet indicateur, certains utilisateurs négligent encore d'effectuer l'opération de maintenance et appuient sur le bouton de réinitialisation de l'indicateur de maintenance sans avoir réellement réalisé la maintenance.

Il est connu de la demande de brevet FR2890944 déposée par la demanderesse, de remédier à cet inconvénient en équipant l'appareil de moyens de détection de l'ouverture du bouchon de vidange permettant de détecter l'ouverture du bouchon de vidange même lorsque cette ouverture a été réalisée alors que l'appareil était déconnecté du réseau électrique.

De tels moyens de détection présentent l'avantage de déduire de manière quasi-certaine que l'opération de maintenance a effectivement été réalisée.

Cependant, les moyens de détection proposés dans ce document présentent l'inconvénient d'être relativement complexe et couteux à mettre en oeuvre.

Aussi, le but de la présente invention est de remédier à ces inconvénients en proposant un appareil électroménager comprenant un dispositif de détection de la réalisation effective de l'opération de maintenance qui soit simple et économique à réaliser.

A cet effet, l'invention a pour objet un appareil électroménager comportant un organe amovible devant être enlevé pour effectuer une opération de maintenance et un indicateur activé automatiquement par l'appareil pour alerter l'utilisateur sur la nécessité d'effectuer l'opération de maintenance, l'appareil comportant un dispositif de détection du retrait de l'organe amovible, caractérisé en ce que le dispositif de détection comporte un commutateur électrique qui comprend un bouton poussoir se déplaçant entre une position de repos, vers laquelle il est ramené par un ressort de rappel en l'absence de l'organe sur l'appareil, et une position actionnée, vers laquelle il est amené par l'organe lorsque ce dernier est correctement disposé sur l'appareil, le commutateur électrique pouvant occuper au moins deux états de commutation différents lorsque le bouton poussoir est en position actionnée et changeant d'état de commutation à chaque fois que le bouton poussoir effectue un aller retour entre la position actionnée et la position de repos, et en ce que l'appareil comporte un circuit électronique de contrôle qui comporte une mémoire dans laquelle est stocké l'état de commutation du commutateur lors de l'activation de l'indicateur, et qui, lors de la mise sous tension de l'appareil, déclenche un phase de test dans laquelle il compare l'état de commutation du commutateur avec celui stocké dans la mémoire pour en déduire le retrait de l'organe lorsque l'état de commutation du commutateur a changé, c'est-à-dire lorsque l'état de commutation du commutateur vu par le circuit électronique de contrôle est différent de celui stocké dans la mémoire.

Un tel appareil, comprenant un dispositif de détection faisant appel à un commutateur électrique à bouton poussoir couramment disponible dans le commerce à faible coût, présente l'avantage d'être fiable, simple et économique à mettre en oeuvre.

Selon une autre caractéristique de l'invention, la mémoire ne stocke qu'une seule valeur de l'état de commutation.

Une telle caractéristique permet de réduire encore le coût de fabrication du dispositif de détection de l'appareil en utilisant une mémoire simple et peu couteuse.

Selon une autre caractéristique de l'invention, l'appareil comporte un dispositif de sécurité interdisant le fonctionnement de l'appareil, ou ne permettant qu'un fonctionnement dans un mode dégradé, tant qu'un retrait de l'organe n'a pas été détecté par le dispositif de détection consécutivement à l'activation de l' indicateur.

Une telle caractéristique a l'avantage de forcer l'utilisateur à réaliser l'opération de maintenance s'il souhaite pouvoir utiliser pleinement son appareil.

Selon encore une autre caractéristique de l'invention, l'organe est un bouchon venant fermer un orifice de vidange.

Une telle caractéristique permet d'éviter une dégradation de l'appareil lorsque la vidange n'est pas réalisée.

De manière préférentielle, l'orifice de vidange est un orifice de vidange d'une cuve génératrice de vapeur.

Selon une autre caractéristique de l'invention, le bouton poussoir est disposé en bordure de l'orifice et se déplace parallèlement à l'axe de l'orifice pour passer de la position de repos à la position actionnée.

Une telle caractéristique permet l'utilisation d'un bouton poussoir de construction simple et peu couteuse.

Selon une autre caractéristique de l'invention, le bouton poussoir fait saillie en bordure de l'orifice lorsqu'il occupe la position de repos et le bouchon vient exercer une pression qui enfonce le bouton poussoir vers la position actionnée lorsque le bouchon ferme l'orifice.

Une telle caractéristique permet l'actionnement du bouton poussoir par le bouchon de façon simple, fiable et peu couteuse.

Selon une autre caractéristique de l'invention, l'organe est un réservoir de fluide et l'indicateur activé sur l'appareil est un indicateur de réservoir vide.

Une telle caractéristique permet d'avoir un appareil dans lequel le retrait du réservoir pour son remplissage est détecté par l'appareil même lorsque cette opération est effectuée alors que l'appareil n'est pas relié au réseau électrique.

Selon une autre caractéristique de l'invention, le commutateur électrique change d'état de commutation à chaque fois que le bouton poussoir est amené en position actionnée et conserve cet état de commutation lorsque le bouton poussoir est ramené en position de repos.

Selon une autre caractéristique de l'invention, l'appareil est un appareil de repassage.

Selon une autre caractéristique de l'invention, l'appareil doit être relié à un réseau électrique domestique par un câble d'alimentation pour fonctionner et l'opération de maintenance s'effectue de préférence lorsque l'appareil est déconnecté du réseau électrique.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- les figures 1 et 2 sont des vues en perspective d'un appareil de repassage équipé d'un dispositif de détection de l'ouverture d'un bouchon de vidange selon l'invention, le bouchon de vidange étant représenté respectivement dans une position fermée et dans une position ouverte ;
- la figure 3 est une vue en perspective, agrandie, d'une coupe selon la ligne III-III de la figure 1 du dispositif de détection de l'ouverture du bouchon de vidange.

Seuls les éléments nécessaires à la compréhension de l'invention ont été représentés. Pour faciliter la lecture des dessins les mêmes éléments portent les mêmes références d'une figure à l'autre.

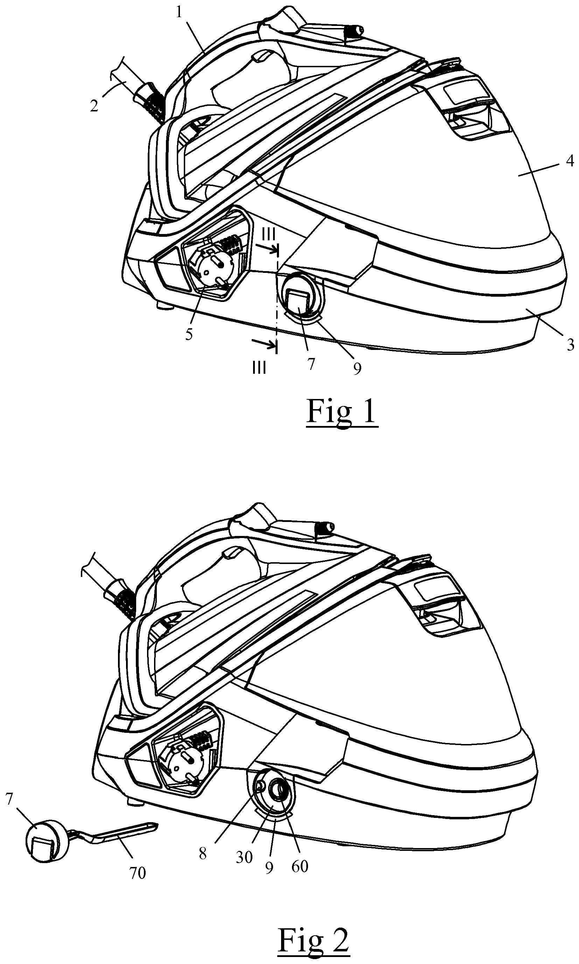

Les figures 1 et 2 représentent un appareil de repassage comportant un fer à repasser 1 relié par un cordon 2 à une base 3 génératrice de vapeur, la base 3 comportant un réservoir 4 ménagé sous une surface supérieure inclinée sur laquelle le fer à repasser 1 peut être posé lors des phases inactives de repassage ou lors du rangement de l'appareil.

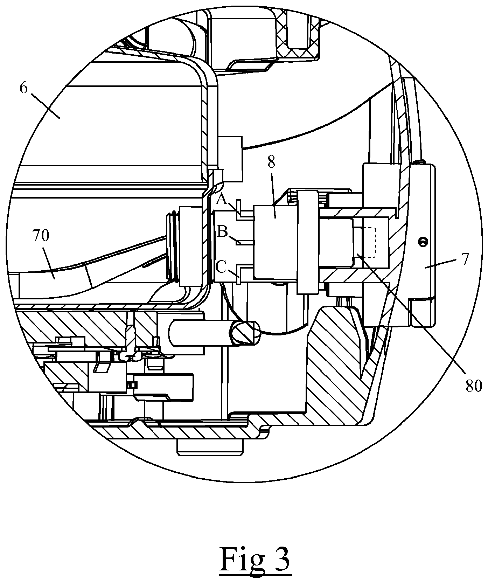

La base 3 comporte un câble d'alimentation électrique, avantageusement monté sur un enrouleur automatique, qui comprend une extrémité munie d'une prise 5 destinée à être reliée à un réseau domestique lors de l'utilisation de l'appareil. La base 3 comprend également une cuve 6, visible uniquement sur la figure 3, permettant la génération de vapeur sous une pression de 4 à 6 bars. La cuve 6 est chauffée au moyen d'une résistance électrique et est alimentée en eau du réservoir 4 par une pompe, non visible sur les figures, la cuve 6 comprenant classiquement un orifice de sortie de vapeur munie d'une électrovanne qui est reliée au cordon 2 pour permettre la diffusion de la vapeur en direction du fer à repasser.

Conformément à la figure 2 la cuve 6 comporte un orifice 60 de vidange qui débouche sur un côté de la base 3 et est fermé par un bouchon 7 amovible, accessible depuis l'extérieur de la base 3, le bouchon 7 étant vissé sur l'orifice 60 et étant solidaire d'un récipient 70 récupérateur de tartre décrit plus en détails dans la demande de brevet FR2904683 déposée par la demanderesse.

Afin d'alerter l'utilisateur sur la nécessité de faire la vidange et éviter notamment l'envoi de tartre vers le fer à repasser 1, l'appareil est équipé d'un indicateur 9 de vidange. Cet indicateur 9 peut être constitué par un voyant lumineux et/ou une alarme sonore, qui est activé par une carte de pilotage, non représentée sur les figures, de préférence après un nombre prédéterminé de cycles de fonctionnement de la pompe ou lorsque le temps de fonctionnement cumulé de l'appareil a atteint un seuil donné.

Dans l'exemple illustré sur les figures, l'indicateur de vidange comprend un voyant lumineux 9, activé de manière fixe ou clignotante, disposé au voisinage du bouchon 7. Un tel voyant lumineux 9 présente avantageusement une forme en arc de cercle qui s'étend en bordure du bouchon 7 de manière à indiquer visuellement à l'utilisateur que l'opération de maintenance nécessite l'ouverture du bouchon 7.

Lorsque cet indicateur de vidange est activé, la cuve 6 doit être nettoyée par l'utilisateur. Cette opération de maintenance peut être effectuée facilement en posant l'appareil au bord d'un évier et en dévissant le bouchon 7 de manière à laisser s'écouler les éventuelles particules de tartre présentes dans l'eau de la cuve 6 et à extraire le récipient 70 récupérateur de tartre de la cuve 6, ce dernier devant être rincé avant d'être remis en place sur l'orifice 60 de vidange.

Pour des questions de sécurité, la vidange de la cuve 6 est normalement effectuée lorsque l'appareil n'est plus sous tension, le cordon 2 d'alimentation électrique de l'appareil étant déconnecté du réseau électrique.

Pour s'assurer que l'opération de maintenance a bien été effectuée par l'utilisateur, l'appareil est équipé d'un dispositif de détection de l'ouverture du bouchon 7 permettant, à la mise sous tension de l'appareil, de détecter une ouverture du bouchon 7 bien que cette ouverture ait été effectuée lorsque l'appareil était hors tension et/ou déconnecté du réseau électrique.

Comme on peut le voir sur les figures 2 et 3, le dispositif de détection de l'ouverture du bouchon 7 comporte un commutateur 8 électrique comprenant un bouton poussoir 80 disposé au voisinage de l'orifice 60, l'orifice 60 étant avantageusement disposé au fond d'une cavité 30 ouverte sur un côté de la base 3, dont la forme est adaptée pour recevoir le bouchon 7.

De manière préférentielle, le bouton poussoir 80 se déplace entre une position de repos, illustrée sur la figure 2, vers laquelle il est ramené par un ressort de rappel en l'absence du bouchon 7 sur l'orifice 60, et une position actionnée, illustrée sur la figure 3, vers laquelle il est amené par le bouchon 7 lorsque ce dernier ferme l'orifice 60.

Dans l'exemple de réalisation illustré, le bouton poussoir 80 se déplace parallèlement à l'axe longitudinal de l'orifice 60 et fait saillie en bordure de la cavité 30 lorsqu'il occupe la position de repos. Le bouton poussoir 80 se trouve progressivement enfoncé vers la position actionnée par la face inférieure du bouchon 7 venant en regard du fond de la cavité 30 lorsque le bouchon 7 est vissé sur l'orifice 60, le bouton poussoir 80 étant maintenu en position actionnée par le bouchon 7 lorsque ce dernier ferme l'orifice 60.

Plus particulièrement selon l'invention, le commutateur 8 utilisé pour détecter l'ouverture du bouchon 7 est un commutateur électrique pouvant occuper au moins deux états de commutation électrique différents lorsque le bouton poussoir 80 est en position actionnée, le commutateur 8 changeant d'état de commutation à chaque fois que le bouton poussoir 80 effectue un aller retour entre la position actionnée et la position de repos.

De manière préférentielle, le commutateur 8 change d'état de commutation à chaque fois que le bouton poussoir 80 est amené en position actionnée et conserve cet état de commutation lorsque le bouton poussoir 80 est ramené en position de repos.

Dans l'exemple de réalisation illustré sur la figure 3, le commutateur 8 comporte trois bornes de connexion A,B,C et l'actionnement du bouton poussoir 80 permet alternativement d'établir une connexion électrique soit entre les bornes AB, soit entre les bornes BC. Un tel commutateur à bouton poussoir est réalisé selon une conception très largement connue de l'homme du métier, dont un mode de réalisation est par exemple décrit dans la demande de brevet US 4 095 070, et qui ne nécessite donc pas une plus ample description.

Ainsi, lorsque le bouchon 7 est vissé une première fois sur l'orifice 60 pour le fermer, le bouton poussoir 80 est amené en position actionnée et le commutateur 8 présente un premier état de commutation correspondant par exemple à celui dans lequel la connexion électrique est établie entre les bornes AB.

Lorsque le bouchon 7 est dévissé pour effectuer l'opération de vidange, le bouton poussoir 80 retourne en position de repos, illustrée en pointillé sur la figure 3, sous l'effet de son ressort de rappel.

Une fois l'opération de vidange effectuée, l'utilisateur referme le bouchon 7, en le vissant de nouveau sur l'orifice 60, ce qui provoque le déplacement bouton poussoir 80 vers la position actionnée et le basculement du commutateur 8 vers un deuxième état de commutation dans lequel la connexion électrique est établie entre les bornes BC.

Le dispositif de détection de l'ouverture du bouchon 7 ainsi réalisé est relié à la carte de pilotage, cette dernière interdisant avantageusement le fonctionnement de l'appareil lorsqu'aucune ouverture du bouchon 8 n'a été détectée suite à l'activation de l'indicateur de vidange.

A cet effet, la carte de pilotage de l'appareil comporte un circuit électronique de contrôle qui comprend une mémoire dans laquelle est stocké l'état de commutation du commutateur 8 lors de l'activation de l'indicateur 9 (connexion électrique établie entre les bornes AB ou connexion électrique établie entre les bornes BC), le circuit électronique déclenchant, lors de la mise sous tension de l'appareil, une phase de test dans laquelle il compare l'état de commutation du commutateur 8 vu par le circuit électronique de contrôle avec celui stocké dans la mémoire.

Si l'état de commutation du commutateur 8 est le même que celui stocké dans la mémoire, le circuit de contrôle en déduit qu'il n'y a pas eu d'ouverture du bouchon 8 et maintient l'activation de l'indicateur 9 tout en interdisant le fonctionnement de l'appareil, par exemple en coupant l'alimentation de la résistance électrique de la cuve 6.

Si l'état de commutation du commutateur 8 vu par le circuit électronique est différent de celui stocké dans la mémoire, la carte pilotage en déduit que la vidange a été effectuée par l'utilisateur et autorise le fonctionnement normal de l'appareil. Cette détection de l'ouverture du bouchon 7 pour réaliser la vidange s'accompagne alors automatiquement d'une désactivation de l'indicateur 9 ainsi que d'une réinitialisation du compteur utilisé pour calculer le moment de son activation.

L'appareil ainsi réalisé présente donc l'avantage de comporter un dispositif de détection simple et économique à réaliser qui permet de détecter l'ouverture du bouchon pour la vidange de la cuve, bien que cette opération ait été effectuée alors que l'appareil était hors tension. Le dispositif de détection ainsi réalisé présente également l'avantage de fonctionner si l'ouverture du bouchon est réalisée avec l'appareil sous tension.

Enfin, dans un tel appareil, le consommateur n'a pas besoin d'effectuer manuellement la réinitialisation de l'indicateur de vidange, cette opération s'effectuant de manière automatique.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation non représentée, le dispositif de détection pourra être utilisé pour détecter la mise en place et le retrait d'un réservoir devant être rempli par l'utilisateur lors de l'activation par l'appareil d'un indicateur de réservoir vide.

Ainsi dans une variante de réalisation, l'activation de l'indicateur d'entartage pourra permettre le fonctionnement de l'appareil uniquement dans un mode dégradé, par exemple en autorisant uniquement le fonctionnement du fer à repasser dans un mode sec, c'est-à-dire sans émission de vapeur.

Ainsi dans une variante de réalisation non représentée, l'invention pourra être appliquée sur une cafetière, un aspirateur ou tout autre appareil électroménager nécessitant ponctuellement une opération de maintenance de l'appareil.

## Revendications

1. Appareil électroménager comportant un organe (7) amovible devant être enlevé pour effectuer une opération de maintenance et un indicateur (9) activé automatiquement par l'appareil pour alerter l'utilisateur sur la nécessité d'effectuer ladite opération de maintenance, l'appareil comportant un dispositif de détection du retrait dudit organe (7), **caractérisé en ce que** ledit dispositif comporte un commutateur (8) électrique qui comprend un bouton poussoir (80) se déplaçant entre une position de repos, vers laquelle il est ramené par un ressort de rappel en l'absence dudit organe (7) sur l'appareil, et une position actionnée, vers laquelle il est amené par l'organe (7) lorsque ce dernier est correctement disposé sur l'appareil, le commutateur (8) électrique pouvant occuper au moins deux états de commutation différents lorsque le bouton poussoir (80) est en position actionnée et changeant d'état de commutation à chaque fois que le bouton poussoir (80) effectue un aller retour entre la position actionnée et la position de repos, et **en ce que** l'appareil comporte un circuit électronique de contrôle qui comporte une mémoire dans laquelle est stocké l'état de commutation du commutateur (8) lors de l'activation de l'indicateur, et qui, lors de la mise sous tension de l'appareil, déclenche un phase de test dans laquelle il compare l'état de commutation du commutateur (8) avec celui stocké dans la mémoire pour en déduire le retrait dudit organe (7) lorsque l'état de commutation du commutateur (8) a changé.

2. Appareil électroménager selon la revendication 1, **caractérisé en ce que** la mémoire ne stocke qu'une seule valeur de l'état de commutation.

3. Appareil électroménager selon l'une quelconque des revendications 1 à 2, **caractérisé en ce qu'**il comporte un dispositif de sécurité interdisant le fonctionnement de l'appareil, ou ne permettant qu'un fonctionnement dans un mode dégradé, tant qu'un retrait dudit organe (7) n'a pas été détecté par le dispositif de détection consécutivement à l'activation de l'indicateur (9).

4. Appareil électroménager selon l'une quelconque des revendications 1 à 3, **caractérisé en ce que** ledit organe (7) est un bouchon venant fermer un orifice (60) de vidange.

5. Appareil électroménager selon la revendication 4, **caractérisé en ce que** le bouton poussoir (80) est disposé en bordure de l'orifice (60) et se déplace parallèlement à l'axe de l'orifice (60) pour passer de la position de repos à la position actionnée.

6. Appareil électroménager selon la revendication 5, **caractérisé en ce que** le bouton poussoir (80) fait saillie en bordure de l'orifice (60) lorsqu'il occupe la position de repos et ce que le bouchon (7) vient exercer une pression qui enfonce le bouton poussoir (80) vers la position actionnée lorsque le bouchon ferme l'orifice (60).

7. Appareil électroménager selon l'une quelconque des revendications 1 à 6, **caractérisé en ce que** ledit organe (7) est un réservoir de fluide et **en ce que** ledit indicateur (9) est un indicateur de réservoir vide.

8. Appareil électroménager selon l'une quelconque des revendications 1 à 7, **caractérisé en ce que** le commutateur (8) électrique change d'état de commutation à chaque fois que le bouton poussoir (80) est amené en position actionnée et conserve cet état de commutation lorsque le bouton poussoir (80) est ramené en position de repos.

9. Appareil électroménager selon l'une quelconque des revendications 1 à 8, **caractérisé en ce que** ledit appareil est un appareil de repassage.

10. Appareil électroménager selon l'une quelconque des revendications 1 à 9, **caractérisé en ce que** ledit appareil doit être relié à un réseau électrique domestique par un câble d'alimentation pour fonctionner et **en ce que** ladite opération de maintenance s'effectue de préférence lorsque l'appareil est déconnecté du réseau électrique.

## Patentansprüche

1. Elektrisches Haushaltsgerät, aufweisend ein abnehmbares Element (7), das zur Durchführung eines Wartungsvorgangs entfernt werden soll, und einer Anzeige (9), die von dem Gerät automatisch aktiviert wird, um den Benutzer über die Notwendigkeit zu alarmieren, den Wartungsvorgang durchzuführen, wobei das Gerät eine Vorrichtung zum Erfassen der Abnahme des Elements (7) aufweist, **dadurch gekennzeichnet, dass** die Vorrichtung einen elektrischen Schalter (8) aufweist, der einen Druckknopf (80) umfasst, der sich zwischen einer Ruheposition, zu der er durch eine Rückstellfeder in Abwesenheit des Elements (7) auf dem Gerät zurückgebracht wird, und einer angetriebenen Position bewegt, zu der er durch das Element (7) gebracht wird, wenn letzteres korrekt auf dem Gerät angeordnet ist, wobei der elektrische Schalter (8) mindestens zwei verschiedene Schaltzustände einnehmen kann, wenn sich der Druckknopf (80) in der angetriebenen Position befindet, und den Schaltzustand jedes Mal ändert, wenn der Druckknopf (80) eine Hin- und Herbewegung zwischen der angetriebenen Position und der Ruheposition durchführt, und dass das Gerät eine elektronische Steuerschaltung aufweist, die einen Speicher aufweist, in dem der Schaltzustand des Schalters (8) während der Aktivierung der Anzeige gespeichert ist, und die beim Einschalten des Gerätes eine Testphase auslöst, in der sie den Schaltzustand des Schalters (8) mit dem im Speicher gespeicherten vergleicht, um daraus die Entnahme des Elements (7) abzuleiten, wenn sich der Schaltzustand des Schalters (8) geändert hat.

2. Elektrisches Haushaltsgerät nach Anspruch 1, **dadurch gekennzeichnet, dass** der Speicher nur einen einzigen Wert des Schaltzustands speichert.

3. Elektrisches Haushaltsgerät nach einem der Ansprüche 1 bis 2, **dadurch gekennzeichnet, dass** es eine Sicherheitsvorrichtung aufweist, die den Betrieb des Geräts verbietet oder nur den Betrieb in einem herabgesetzten Modus zulässt, solange eine Abnahme des Elements (7) von der Vorrichtung zum Erfassen nach der Aktivierung des Indikators (9) nicht erfasst wurde.

4. Elektrisches Haushaltsgerät nach einem der Ansprüche 1 bis 3, **dadurch gekennzeichnet, dass** das Element (7) ein Stopfen ist, der eine Öffnung (60) zum Entleeren verschließt.

5. Elektrisches Haushaltsgerät nach Anspruch 4, **dadurch gekennzeichnet, dass** der Druckknopf (80) an dem Rand der Öffnung (60) angeordnet ist und sich parallel zu der Achse der Öffnung (60) bewegt, um aus der Ruheposition in die angetriebene Position zu gelangen.

6. Elektrisches Haushaltsgerät nach Anspruch 5, **dadurch gekennzeichnet, dass** der Druckknopf (80) am Rand der Öffnung (60) vorsteht, wenn er die Ruhestellung einnimmt, und dass der Stopfen (7) einen Druck ausübt, der den Druccknopf (80) zu der angetriebenen Position eindrückt, wenn der Stopfen die Öffnung (60) verschließt.

7. Elektrisches Haushaltsgerät nach einem der Ansprüche 1 bis 6, **dadurch gekennzeichnet, dass** das Element (7) ein Fluidreservoir ist, und dass die Anzeige (9) eine Anzeige für einen leeren Tank ist.

8. Elektrisches Haushaltsgerät nach einem der Ansprüche 1 bis 7, **dadurch gekennzeichnet, dass** der elektrische Schalter (8) seinen Schaltzustand jedes Mal ändert, wenn der Druckknopf (80) in die betätigte Position gebracht wird, und diesen Schaltzustand beibehält, wenn der Druckknopf (80) in die Ruheposition zurückgebracht wird.

9. Elektrisches Haushaltsgerät nach einem der Ansprüche 1 bis 8, **dadurch gekennzeichnet, dass** das Gerät ein Bügelgerät ist.

10. Elektrisches Haushaltsgerät nach einem der Ansprüche 1 bis 9, **dadurch gekennzeichnet, dass** das Gerät an ein elektrisches häusliches Stromnetz über ein Versorgungskabel zum Betrieb anzuschließen ist, und dass der Wartungsvorgang vorzugsweise ausgeführt wird, wenn das Gerät von dem Stromnetz getrennt ist.

## Claims

1. Electrical household appliance comprising a removable member (7) having to be removed to carry out a maintenance operation and an indicator (9) automatically activated by the appliance to alert the user on the necessity to carry out said maintenance operation, the appliance comprising a device for detecting the removal of said member (7), **characterised in that** said device comprises an electrical switch (8) which comprises a pushbutton (80) being moved between an idle position, towards which it is brought back by a counter spring in the absence of said member (7) on the appliance, and an actuated position, towards which it is brought by the member (7) when the latter is correctly arranged on the appliance, the electrical switch (8) can occupy at least two different switching statuses when the pushbutton (80) is in the actuated position and changing switching status each time that the pushbutton (80) goes back and forth between the actuated position and the idle position, and **in that** the appliance comprises an electronic control circuit which comprises a memory, wherein the switching status of the switch (8) is stored during the activation of the indicator, and which, during the switching on of the appliance, triggers a test phase, wherein it compares the switching status of the switch (8) with that stored in the memory to deduce from it the removal of said member (7) when the switching status of the switch (8) has changed.

2. Electrical household appliance according to claim 1, **characterised in that** the memory only stores one single value of the switching status.

3. Electrical household appliance according to any one of claims 1 to 2, **characterised in that** it comprises a safety device forbidding the functioning of the appliance, or only making it possible for a functioning in a degraded mode, while a removal of said member (7) has not been detected by the detection device consecutively with the activation of the indicator (9).

4. Electrical household appliance according to any one of claims 1 to 3, **characterised in that** said member (7) is a stopper closing a draining orifice (60).

5. Electrical household appliance according to claim 4, **characterised in that** the pushbutton (80) is arranged at the edge of the orifice (60) and is moved parallel to the axis of the orifice (60) to pass from the idle position to the actuated position.

6. Electrical household appliance according to claim 5, **characterised in that** the pushbutton (80) protrudes at the edge of the orifice (60) when it occupies the idle position and that the stopper (7) exerts a pressure which presses the pushbutton (80) towards the actuated position when the stopper closes the orifice (60).

7. Electrical household appliance according to any one of claims 1 to 6, **characterised in that** said member (7) is a fluid tank and **in that** said indicator (9) is an empty tank indicator.

8. Electrical household appliance according to any one of claims 1 to 7, **characterised in that** the electrical switch (8) changes switching status each time that the pushbutton (80) is brought into an actuated position and conserves this switching status when the pushbutton (80) is brought back into the idle position.

9. Electrical household appliance according to any one of claims 1 to 8, **characterised in that** said appliance is an ironing appliance.

10. Electrical household appliance according to any one of claims 1 to 9, **characterised in that** said appliance must be connected to a domestic electrical network by a power cable to function and **in that** said maintenance operation is carried out preferably when the appliance is disconnected from the electrical network.
